Europäisches Patentamt

European Patent Office

Office européen des brevets

(11) Publication number: **0 393 847**
**A2**

## (12) EUROPEAN PATENT APPLICATION

(21) Application number: **90830185.6**

(51) Int. Cl.5: **B01D 39/14**

(22) Date of filing: **30.04.90**

(30) Priority: **18.05.89 IT 2054389**

(43) Date of publication of application:
**22.11.90 Bulletin 90/47**

(84) Designated Contracting States:
**AT CH DE ES FR GB GR LI NL**

(71) Applicant: **Mariani, Fabrizio**
**Via Ronchi, 20**
**I-20134 Milano(IT)**

(72) Inventor: **Mariani, Fabrizio**
**Via Ronchi, 20**
**I-20134 Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Air filter for civil and industrial applications.**

(57) The invention relates to an air filter,which has been. specifically designed for filtering air of civil and industrial environments,characterized in that it comprises,in combination: at least a filtering adsorbing layer,at least a physical filtering layer and at least one or two chemical reaction filtering layers operating based on an acid/base and base/acid reaction with the gaseous substances to be filtered.

Fig.1

EP 0 398 847 A2

The present invention relates to an air filter which has been specifically designed for civil and industrial applications.

As is known, environment pollution is directly related to the release into atmospheric air of polluting substances.

Noxious gases, powders, high weight metals, carbonious substances, asbestos particles and the like, which represent the side products of chemical and physical transformations of fuels and mechanical and industrial treatments, are frequently released into the atmosphere and held herein since the stagnant microclimate prevent air from being easily exchanged.

This causes an increase of the polluting substance concentration to very dangerous levels for human health.

In the inside of office, house and the like buildings, in which a person lives for 80-90% of his time, in addition to the above mentioned polluting agents there are usually present also other noxious polluting substances which are released from the wall coatings, furniture pieces and the like.

Thus, the inside environment of these buildings is usually more polluted than the outside environment, to the pollution contributing the latter mentioned polluting substances.

As is known, atmospheric air usually comprises a gaseous mixture including about 21% oxygen, 78% nitrogen, 1% argon and 0.03% $CO_2$ with the addition of traces of several other gases.

A concentration of oxygen less than 12% and of $CO_2$ larger than 5%, at the atmospheric pressure, is dangerous for the human beings, even for a small time period.

Atmospheric air also contains the above mentioned polluting substances, as well as other polluting substances such as : sulphur oxidation products, powder released by industries and tires as well as from asphalted road surfaces, asbestos particles released from motor vehicle brakes and building materials, mercury vapors relesed from industrial processes, in addition to a some amount of organic compounds, released from chemical and combustion processes.

To these gaseous compounds, atmospheric powders are to be added, comprising different size and shape solid particles originated by solid substances being milled and subjected to thermal expansion, and the nature of which can be mineral, such as rocks, metals, sand and the like, vegetal such as spores, seeds, wood and cotton fibres, and animal such as wool, piles and the like.

These particles, to be considered as powders, must have a diameter not greater than 100 micrometers.

Fumes are generated by combustion or distillation or sublimation processes and chemical reactions and they comprise carbonious and metal oxide particles with a particle size from 0.1 micrometers to less than 1 micrometer.

Other polluting substances which are frequently included in atmospheric air include $SO_2$ usually generated by mineral oil and coke combustion processes, $NO_2$ which is usually generated by internal combustion engines, carbon monoxide and other unburnt hydrocarbons.

As stated, in addition to the polluting substances originated from the outside environment, it is necessary to consider those which are directly generated inside a room and deriving, for example, by wall coating materials, furniture pieces, clothes and from the metabolism of the human beings present herein.

Another pollution source, generated in the inside of a room is due to the tobacco smoke the particles of which have very small diameters, usually varying from 0.1 and 0.3 micrometers.

Yet another pollution element is ozone which, even if it was considered as a health aid in the past, is at present considered as noxious.

In particular, in air filetring systems, ozone may be generated by electrostatic filters and it is a gas which tends to reduce the pulmonary function of the human organism and render it more susceptible to respiratory infections.

The maximum air concentration of ozone, allowed by several Organizations, is of 0.1 ppm's; this value, on the other hand, can be easily exceeded in urban areas, under intensive traffic conditions.

Yet other polluting substances comprise powders of very different nature which must be differently process ed in several filtering units.

In order to solve this problem dust collection filters are used which remove from air solid particles, by means of a so-called absolute filtering.

These filters operate based on the principle of arresting gas dispersed particles by means of filtering beds, comprising fibrous materials, having interfibre gaps less than the particle size of the particles which must be removed.

The overall filtering mechanism thereon the fibrous bed filtering is based derives from a combination of several filtering actions.

Other known filtering units provide for the removal of gaseous particles from air by means of adsorbing on carbonious substances; as is known all of the solid materials subject gas or liquid molecules to weak attraction forces and the captured molecules form a thin layer on the surface of the solid material, having usually a thickness of one or few molecules; then, as the temperature or relative moisture changes, the molecules can be freed again.

These types of filters operate based on two main principles,i.e adsorption and adsorption.

On the other hand,these known filters have been found unsatisfactory for performing a proper air filtering,mainly in closed environments such as offices,homes and the like since known filtering units are suitable for given types of polluting agents,but are not suitable for other types.

## SUMMARY OF THE INVENTION

Thus,the aim of the present invention is to overcome the above mentioned problem,by providing an air filtering unit which has been specifically designed for offices,rooms and industrial environments and which is suitable to filter off from air both solid substances having a diameter greater than 0.4 micrometers and toxic gases which are usually present in the outside and inside environments of urban areas.

Within this aim,a main object of the present invention is to provide such a filtering unit which is adapted to remove solid products such as powders, bacteria,viruses,mould spores,acari,asbestos particles, glass wool fibres as well as gaseous substances such as smog,$SO_2$,hydrogen sulphide,ammonia,chlorine,radon, hydrocyanic acid,gasoline,ozone,domestic odors and putrefaction products.

Another object of the present invention is to provide such a filtering unit which is very reliable in operation and can be easily made starting from easily available materials and elements and which,moreover,is very competitive from a mere economic standpoint.

According to one aspect of the present invention,the above mentioned aim and objects,as well as yet other objects which will become more apparent hereinafter,are achieved by an air filtering unit,specifically designed for offices,houses and industrial environments characterized in that said filtering unit comprises, in combination,at least an adsorbing filtering layer, at least a physical filtering layer and at least one or two chemical filtering layers adapted to provide an acid/base and base/acid reaction with gaseous substances to be filtered.

## BRIEF DESCRIPTION OF THE DRAWINGS

Further characteristics and advantages of the invention will become more apparent from the following detailed description of two possible embodiments of an air filtering unit,specifically designed for offices, houses and industrial environments,given merely by way of an indicative but not limitative example,with reference to the accompanying drawing,where:

FIGURE 1 is a schematic view illustrating a first possible embodiment of an air filtering unit according to the present invention; and

FIGURE 2 is a further schematic view illustrating a second possible embodiment of the air filtering unit according to the invention.

## DESCRIPTION OF THE PREFERRED EMBODIMENTS

With reference to the figures of the accompanying drawing,the air filtering unit according to the present invention,which is overally indicated at the reference number 10,comprises a supporting frame,of a substantially known type,which support in its inside a plurality of combined filtering layers.

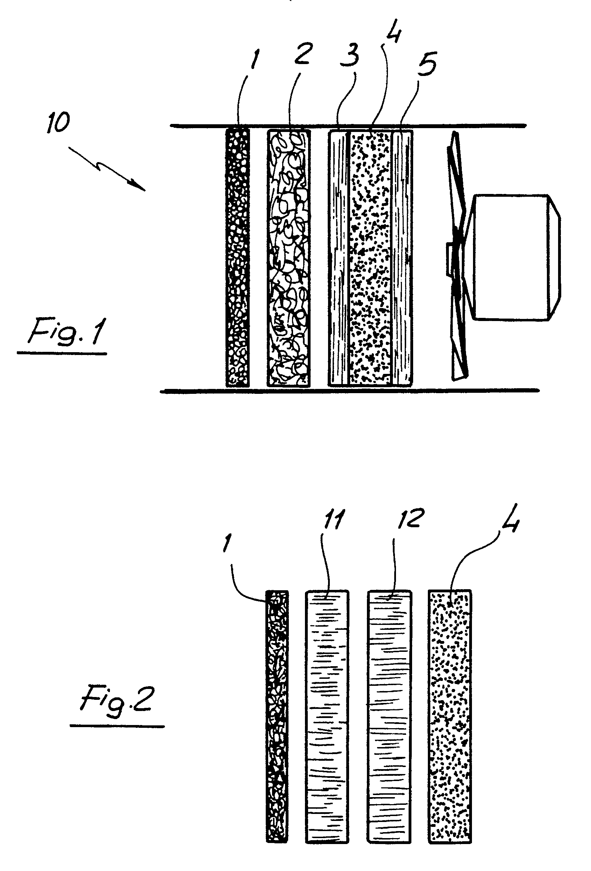

As is shown in figure 1,the filtering unit comprises an adsorbing filtering layer,indicated at the reference number 1,which is made of a plurality of activated carbon particles which have been pressed so as to provide said layer.

Downstream of the filtering unit,in the airflow to be filtered direction,there is arranged a pre-filter element 2,of foamed material or sponge material,which is adapted to restrain the coarser particles of the powders.

Downstream of the pre-filter element 2 there is arranged a first chemical filtering layer 3 which,advantageously,is activated(or impregnated) by NaOH(caustic soda) and KOH(potassium carbonate),which operates as a basic component;said first chemical filtering layer 3 being associated with an absolute type of filter or physical filter provided for restraining the finer particles.

Downstream of the physical filter 4 there is arranged a second chemical filtering layer 5 which is activated,or impregnated,by $HNO_3$ (nitric acid ) or HCl (hydrochloric acid) which practically provide an acid characteristic filtering layer.

As is shown in figure 2,the filtering unit is moreover provided with a filtering layer,also indicated at the reference number 1,downstream of which there is provided a first pre-filter 11,impregnated by basic substances,adjoining a second pre-filter 12 impregnated by acid substances.

Downstream of the two pre-filters,which perform chemical prefiltering and filtering functions,there is arranged an absolute type of filter,also indicated at the reference number 4.

Thus,the provision of chemical filtering elements affords the possibility of fully removing, by a chemical reaction,toxic gaseous substances susceptible to pass through the activated carbon panel arranged upstream of the absolute filter.

The disclosed filtering unit has unique features since combines three filtering systems adapted to fully remove solid and gaseous substances entrained in air and,more specifically,provides a combined cooperating filtering consisting of : a physical filtering, provided by the absolute filter;an adsorption filtering provided by activated carbon;and a chemical reaction filtering provided by the acid/base and base/acid components.

Thus,the subject filtering unit provides a fourfold effect consisting of: molecular adsorption of toxic gases and odors;chemical removal of acid gaseous substances by means of an acid/base chemical reaction,in the first portion which has a basic component;absolute filtering,carried out by the absolute filter,which restrains the fines solid particles; chemical removal of alkaly gaseous substances by means of a base/acid reaction in the portion having the acid component.

From the above disclosure it should be apparent that the invention fully achieves the intended aim and objects.

While the invention has been disclosed and illustrated with reference to preferred embodiments thereof,it should be apparent that the disclosed embodiments are susceptible to several modifications and variations all of which will come within the scope and spirit of the appended claims.

## Claims

1- An air filtering unit specifically designed for offices,houses and industrial environments,characterized in that said filtering unit comprises,in combination,at least an adsorption filtering layer,at least a physical filtering layer and at least one or two chemical filtering layer adapted to filter off gaseous substance by an acid/base and base/acid chemical reaction.

2- An air filtering unit according to claim 1,characterized in that said adsorption filtering layer comprises activated carbon.

3- An air filtering unit according to claim 1,characterized in that said physical filtering layer comprises an absolute filter.

4- An air filtering unit according to claim 1,characterized in that said chemical filtering layer comprises a basic layer and at least an acid layer.

5- An air filtering unit according to claim 1,characterized in that said unit comprises upstream of said absolute filter an acid or basic substance activated prefilter.

6- An air filtering unit according to claim 4, characterized in that said basic layer and said acid layer are applied to sides of said absolute filter.

7- An air filtering unit according to claim 1, characterized in that said unit comprises an adsorption filtering layer,a first basic prefilter and a second acid prefilter,said first and second prefilters being arranged either downstream or upstream of said adsorption filtering layer,and an absolute filter arranged downstream of said adsorption filtering layer.

_Fig.1_

_Fig.2_